# EUROPÄISCHE PATENTSCHRIFT

(11) **EP 0 541 482 B1**
(45) Veröffentlichungstag und Bekanntmachung des Hinweises auf die Patenterteilung: **29.03.1995**
(21) Anmeldenummer: 92810801.8
(22) Anmeldetag: 20.10.1992
(51) Int. Cl.: F16J 9/20, F16J 9/00

(54) **Kolbenkompressor zum ölfreien Verdichten von Gasen**
Piston compressor for an oilfree gas compression
Compresseur à piston pour comprimer un gaz sans lubrification

(30) Priorität: 06.11.1991 CH 3237/91
(43) Veröffentlichungstag der Anmeldung: 12.05.1993
(73) Patentinhaber: Maschinenfabrik Sulzer-Burckhardt AG, CH-4002 Basel (CH)
(72) Erfinder: Feistel, Norbert, CH-8408 Winterthur (CH)
(74) Vertreter: Hammer, Bruno, Dr.

(56) Entgegenhaltungen:
- CH-A- 232 422
- DE-A- 2 361 425
- GB-A- 284 133
- GB-A- 1 357 090
- US-A- 1 779 837

## Beschreibung

Die Erfindung bezieht sich auf einen Kolbenkompressor zum ölfreien Verdichten von Gasen, mit mindestens einem Zylinder und einem darin geführten Kolben, der mit mindestens einem geschlitzten, in einer Ringnut am Kolben untergebrachten, sogenannten gefangenen Kolbenring versehen ist, der mit seiner der Innenfläche des Zylinders abgewendeten Umfangsfläche einen vom Druck des Gases im Kompressionsraum des Zylinders beaufschlagten Raum der Ringnut begrenzt und der, ausgehend von dieser Umfangsfläche, zwei radiale, zueinander parallele Begrenzungsflächen aufweist, von denen sich die dem Kompressionsraum zugewendete Fläche über einen Teil der radialen Ringbreite erstreckt, wobei der Kolbenring mit seinen beiden parallelen Begrenzungsflächen an entsprechenden Flächen der Ringnut gleitend geführt ist.

Ein solcher Kolbenkompressor mit gefangenen Kolbenringen ist aus der CH-PS 482 953 bekannt. Jeder gefangene Kolbenring hat dabei einen in axialer Richtung vorstehenden Kragen, und zwar entweder nur auf der dem Kompressionsraum zugewendeten Seite, so dass der Kolbenring im Querschnitt Winkelprofil hat, oder der vorstehende Kragen erstreckt sich in axialer Richtung auf beiden Seiten des Ringes, so dass sich ein T-förmiger Querschnitt ergibt. Der vorstehende Kragen liegt - in radialer Richtung gesehen - hinter einer axial vorstehenden Schulter der Ringnut, wobei diese Schulter einen Anschlag für den Kolbenring bildet, wenn sich dieser unter dem Druck des auf seiner inneren Umfangsfläche wirkenden Gases aufweitet. Wegen dieser Aufweitungsbegrenzung werden die Kolbenringe als gefangene Ringe bezeichnet.

Im Betrieb des Kolbenkompressors ergeben sich für diese Kolbenringe drei Phasen:
1. Der Kolbenring liegt mit seinem Kragen noch nicht an der Schulter der Ringnut an, aber seine äussere Umfangsfläche gleitet an der Zylinderinnenfläche. Der Kolbenring hat eine hohe Verschleissrate und es besteht geringe Gasleckage.
2. Der Kragen des Kolbenringes erreicht die Anschlagfläche der vorstehenden Schulter der Ringnut, wodurch sich der Verschleiss des Kolbenringes an der Zylinderinnenfläche verringert und die Gasleckage ungefähr noch gleich ist wie vorher.
3. Zwischen der äusseren Umfangsfläche des Kolbenringes und der Zylinderinnenfläche ergibt sich eine Ringspaltdichtung mit geringem Verschleiss und etwas grösserer Gasleckage als vorher. Der gegenüber der Phase gemäss Ziffer 2 eingetretene Ringverschleiss und etwaiger weiterer Ringverschleiss ergeben sich durch geringe Querbewegung des Kolbens im Zylinder. Die dabei auftretende Verschleissrate ist umso geringer, je besser die Führung von Kolben und Kolbenstange ist. Wenn der dichtende Ringspalt zwischen dem Kolbenring und der Zylinderinnenfläche zu gross geworden ist, muss der Kolbenring ausgewechselt werden.

Wegen der Winkel- oder T-Form des Querschnitts der Kolbenringe ist deren Herstellung verhältnismässig aufwendig. Dadurch dass bei den bekannten Kolbenringen der vom vorspringenden Kragen gegen die Zylinderinnenfläche sich erstreckende Teil von zwei radialen, zueinander parallelen Flächen begrenzt ist, die zwischen parallelen Flächen der vorspringenden Schulter bzw. Schultern der Ringnut geführt sind, ergibt sich im Betrieb des Kompressors im Zustand gemäss Ziffer 3 die Möglichkeit des sogenannten Flatterns der Ringe, d.h. einer unkontrollierten Bewegung des Kolbenringes innerhalb seiner Ringnut. Diese Flatterbewegung versucht man entweder durch den auf der inneren Umfangsfläche des Kolbenringes wirkenden Gasdruck oder durch an dieser Fläche anliegende Spannfedern zu vermeiden, was jedoch nur teilweise gelingt und bei Verwendung von Spannfedern auch mit erhöhtem konstruktiven Aufwand verbunden ist.

Auch aus der DE-PS 31 48 488 ist ein gattungsgemäßer gefangener Kolbenring bekannt, bei dem am Uebergang zum vorstehenden Kragen kein rechter Winkel, wie bei der CH-A- 482 953, sondern ein stumpfer Winkel vorgesehen ist, zu dem Zweck, die Kerbwirkung an der Uebergangsstelle zu verringern. Eine Klemmwirkung des Kolbenringes in seiner Anschlagposition an der vorspringenden Schulter der Ringnut ist hier nicht beabsichtigt und auch nicht möglich. Der sich von dem vorspringenden Kragen gegen die Zylinderinnenfläche erstreckende Teil des Kolbenrings ist wie bisher von zwei radialen, zueinander parallelen Flächen begrenzt. Eine Flatterbewegung des Kolbenrings ist hier also ebenfalls nicht vermieden.

Der Erfindung liegt die Aufgabe zugrunde, den Kolbenkompressor der eingangs genannten Art dahingehend zu verbessern, dass das Betriebsverhalten des gefangenen Kolbenringes optimiert wird und die konstruktive Form des Kolbenringes vereinfacht und damit der Herstellungsaufwand verringert wird.

Diese Aufgabe wird erfindungsgemäss dadurch gelöst, dass die dem Kompressionsraum zugewendete Restfläche des Kolbenrings, von der der Zylinderinnenfläche zugewendeten Umfangsfläche ausgehend, als Keilfläche ausgebildet ist, die sich unter einem Winkel von 5 bis 15° zu einer Parallelen zu der dem Kompressionsraum zugewendeten Begrenzungsfläche bis zu dieser Begrenzungsfläche erstreckt, und dass auch die der Keilfläche benachbarte Fläche in der Ringnut am Kolben unter dem gleichen Winkel parallel zur Keilfläche verläuft.

Durch diese Gestaltung des Kolbenrings ergibt sich eine konstruktiv einfache Form, die kostengünstig hergestellt werden kann. Ausserdem ergibt sich durch die Keilfläche im Betrieb des Kompressors während der oben unter Ziffer 3 genannten Phase eine Klemmwirkung des Kolbenrings in der Ringnut, die eine radiale Fixierung des Kolbenrings in seiner Anschlagposition und damit einen minimalen Spalt zwischen der äusseren Umfangsfläche des Kolbenringes und der Zylinderinnenfläche gewährleistet. Die Klemmwirkung vermeidet auch eine Flatterbewegung des Kolbenrings in der Ringnut. Ringverschleiss und Gasleckage sind also in der unter Ziffer 3 genannten Phase geringer als bei den bekannten Kolbenringen. Dies bringt auch den Vorteil mit sich, dass die Lebensdauer der Kolbenringe grösser als bisher ist.

Besonders vorteilhaft ist die neue konstruktive Form des Kolbenrings, wenn nach einer Weiterbildung der Erfindung der Kolbenring aus einem Kunststoff mit guter Trockenlaufeigenschaft besteht. In diesem Fall kann sich bei hohen Temperaturen und Gasdrücken ein an sich bekannter, sonst nicht erwünschter Extrusionseffekt einstellen, der darin besteht, dass sich der Kolbenring in radialer Richtung verformt. Hierdurch wird beim erfindungsgemässen Kolbenring die Dichtfunktion verbessert, ohne dass die Betriebssicherheit beeinträchtigt wird.

Einige Ausführungsbeispiele der Erfindung werden in der folgenden Beschreibung anhand der Zeichnung näher erläutert. Es zeigen:
- Fig.1: schematisch vereinfacht einen Axialschnitt durch den Kolben und den Zylinder eines Kolbenkompressors,
- Fig.2a: im Schnitt das Detail A aus Fig.1 in grösserem Massstab in einer ersten Betriebsphase,
- Fig.2b: das Detail aus Fig.2a in einer zweiten Betriebsphase,
- Fig.3a: u. 3b den Fig.2a und 2b entsprechende Darstellungen bei einem abgewandelten Kolbenring und
- Fig.4a: u. 4b den Fig.2a und 2b entsprechende Darstellungen eines weiteren abgewandelten Kolbenringes.

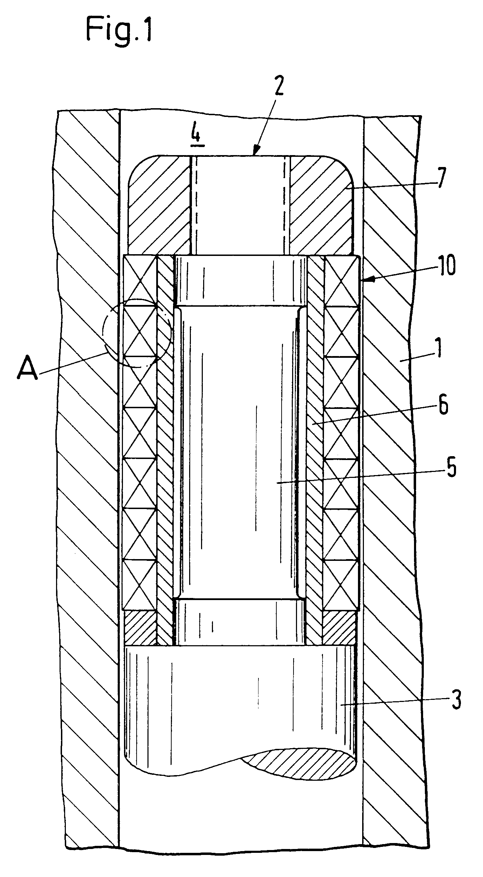

Gemäss Fig.1 weist der Kolbenkompressor einen Zylinder 1 auf, in dem ein Kolben 2 auf- und abbeweglich angeordnet ist. Das in Fig.1 untere Ende des Kolbens geht in eine Kolbenstange 3 über, die in bekannter, nicht dargestellter Weise mit dem Kurbeltrieb verbunden ist. In Fig.1 oberhalb des Kolbens 2 befindet sich der Kompressionsraum 4, in dem in bekannter, nicht dargestellter Weise beim Abwärtshub des Kolbens 2 zu verdichtendes Gas eingesogen wird, das dann beim anschliessenden Aufwärtshub verdichtet und aus dem Kompressionsraum ausgestossen wird. Der Kolben 2 besteht aus einem stangenartigen Fortsatz 5 der Kolbenstange 3, über den eine Hülse 6 geschoben ist, die sieben übereinander angeordnete gefangene Kolbenringe 10 trägt. Die Kolbenringe 10 werden durch eine auf das obere Ende des Fortsatzes 5 aufgeschraubte Mutter 7 zusammengehalten.

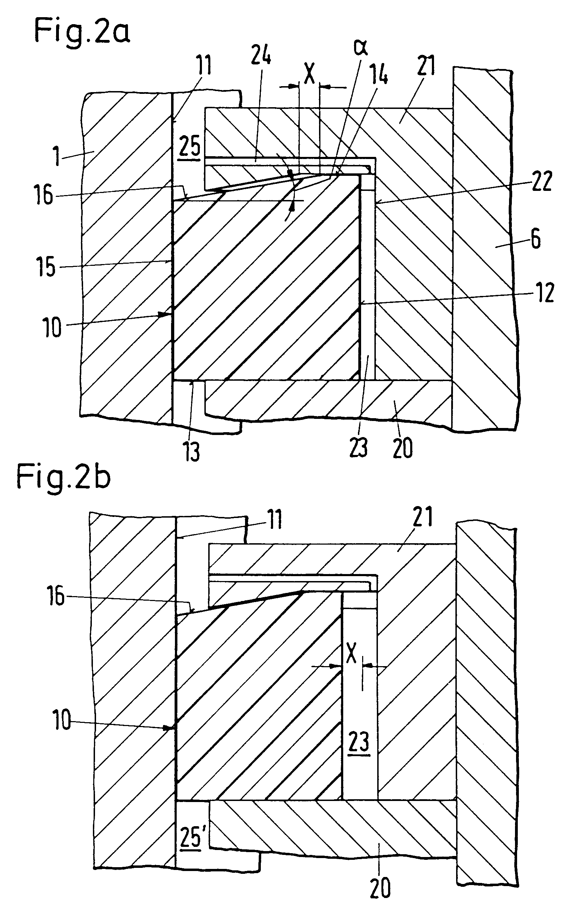

Gemäss Fig.2a hat der geschlitzte Kolbenring 10 eine innere zylindrische Umfangsfläche 12, die der Innenfläche 11 des Zylinders 1 abgewendet ist. Die in Fig.2a untere Begrenzungsfläche 13 des Kolbenrings verläuft rechtwinklig zur inneren Umfangsfläche 12 und ruht zum grössten Teil auf einer ebenen Führungsfläche eines Kammerrings 20. Parallel zur Begrenzungsfläche 13 weist der Kolbenring an seinem in Fig.2 oberen Ende eine Begrenzungsfläche 14 auf, die sich nur über einen Teil der radialen Breite des Kolbenrings 10 erstreckt und die an einer ebenen Führungsfläche eines zweiten Kammerrings 21 anliegt. Zwischen der inneren Umfangsfläche 12 und einer zylindrischen Begrenzungsfläche 22 des Kammerrings 21 ist ein Ringraum 23 gebildet, der über einen Kanal 24 in den Ringraum 25 zwischen dem Zylinder 1 und dem Kammerring 21 mündet. Auf diese Weise steht der Ringraum 23 unter dem Gasdruck, der im Ringraum 25 herrscht und der den Kolbenring 10 mit seiner äusseren Umfangsfläche 15 gegen die Innenfläche 11 des Zylinders 1 drückt.

Zwischen der äusseren Umfangsfläche 15 und der in Fig.2a oberen Begrenzungsfläche 14 des Kolbenringes 10 befindet sich eine Restfläche 16, die als Keilfläche ausgebildet ist. Die Keilfläche 16 steigt unter einem Winkel α = 5 bis 15° bis zur Begrenzungsfläche 14 an, wobei α in bezug auf eine Parallele zur Begrenzungsfläche 14 gemessen wird. Die der Keilfläche 16 benachbarte Begrenzungsfläche im Kammerring 21 ist unter dem gleichen Winkel α geneigt, wobei aber die Führungsfläche im Kammerring für die Begrenzungsfläche 14 in radialer Richtung nach aussen um den Betrag X länger ist als die Begrenzungsfläche 14. Dies bedeutet, dass der Kolbenring 10 in der von den Kammerringen 20 und 21 gebildeten Ringnut um den Betrag X sich nach aussen verschieben kann, wobei die Dicke des Kolbenringes wegen des Reibverschleisses an der Innenfläche 11 entsprechend dünner wird. Dieser Zustand ist in Fig.2b dargestellt.

Gemäss Fig.2b liegt also der Kolbenring 10 mit seiner Keilfläche 16 an der benachbarten Keilfläche des Kammerrings 21 an und ist somit an einer weiteren Ausdehnung in radialer Richtung gehindert. Deshalb ist der Kolbenring ein gefangener Kolbenring. Eine weitere Abnutzung an der äusseren Umfangsfläche 15 ist nur noch möglich, wenn der Kolben während seiner axialen Hin- und Herbewegung radial ausweicht. Dabei kann ein schmaler Ringspalt zwischen der Innenfläche 11 des Zylinders und der äusseren Umfangsfläche 15 des Kolbenrings entstehen, über den etwas Leckgas in den nächsten Ringraum 25′ - in Richtung zum Kurbeltrieb gesehen - entweicht. In diesem Fall arbeitet der Kolbenkompressor wie ein solcher mit Labyrinthdichtungsringen.

Werden für die Kolbenringe 10 trockenlaufende Kunststoffe oder Kunststoffgemische (Blends) aus Polytetrafluoräthylen (PTFE), Polyetheretherketon (PEEK), Polyphenylensulfid (PPS), oder Polyimid (PI) verwendet, kann die eventuelle Leckage durch einen Extrusionseffekt vermieden werden. Dieser Effekt besteht darin, dass der im Raum 23 wirkende Gasdruck den Kolbenring plastisch verformt und dadurch trotz der Klemmwirkung an den Keilflächen eine Berührung seiner Umfangsfläche 15 an der Innenfläche 11 zustande bringt.

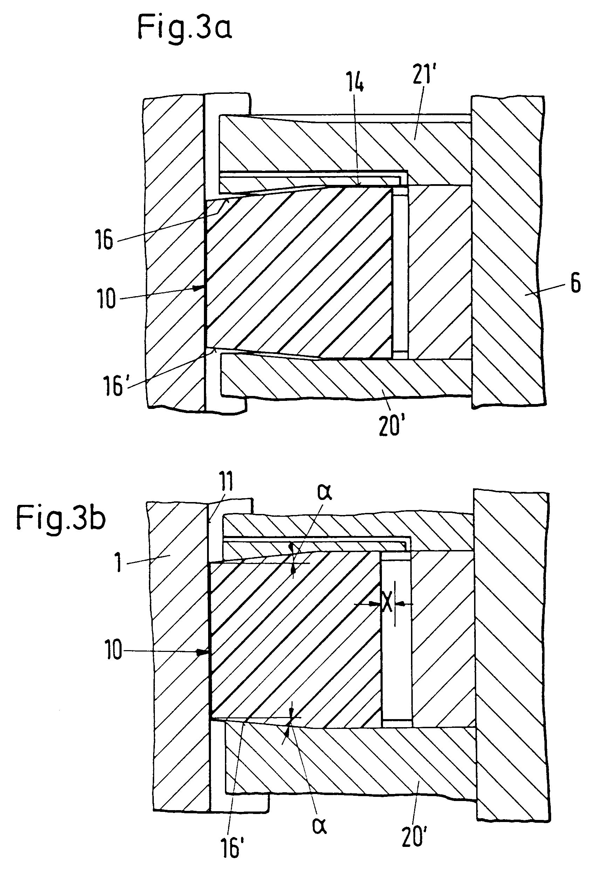

Bei der Ausführungsform gemäss Fig.3a und 3b ist auch die dem Kompressionsraum abgewendete Restfläche 16′ des Kolbenrings als Keilfläche ausgebildet. Entsprechend ist auch die dieser zweiten Keilfläche 16′ benachbarte Fläche im Kammerring 20′ keilförmig ausgebildet. Aus Herstellungs-und Montagegründen sind die Kammerringe 20′ und 21′ in der Ebene der Begrenzungsfläche 14 unterteilt. Diese Ausführungsform ist für Kompressoren bestimmt, in denen der Kolben in zwei Stufen verdichtet, d.h. der Kolben und die Kolbenstange sind so ausgebildet, dass auch am in Fig.1 unteren Ende des Kolbens 2 sich ein Kompressionsraum befindet. Im übrigen funktioniert die Anordnung gemäss Fig.3a und 3b in gleicher Weise wie dies für Fig.2a und 2b beschrieben wurde.

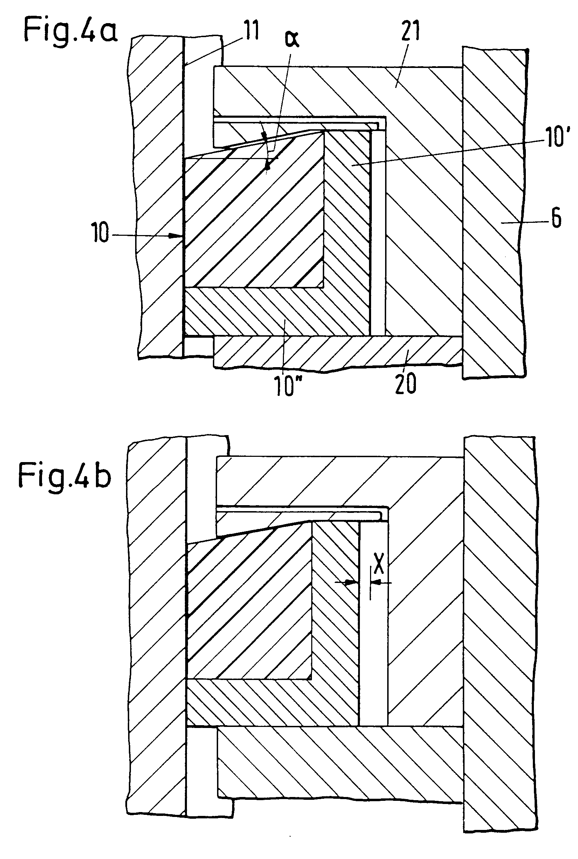

Beim Ausführungsbeispiel gemäss Fig.4a und 4b besteht der Kolbenring 10 aus zwei Werkstoffen unterschiedlicher Warmfestigkeit, indem der der Zylinderinnenfläche 11 abgewendete Teil 10′ und der dem Kompressionsraum abgewendete Teil 10˝ des Kolbenringquerschnitts ein L-förmiges Profil bilden, das eine grössere Warmfestigkeit, aber weniger gute Trockenlaufeigenschaft aufweist als der übrige Ringquerschnitt, für den gute Trockenlaufeigenschaft wichtig ist. Auf diese Weise lässt sich durch das L-Profil der weichere Teil des Kolbenrings stützen. Die Kammerringe 20 und 21 sind wieder gleich ausgebildet wie zu Fig.2a und 2b beschrieben. Auch die Funktionsweise ist die gleiche wie zu diesen Figuren beschrieben. Die Ausführungsform gemäss Fig.4a und 4b wird bei Kompressoren mit extremen Kombinationen von Druck und Temperatur eingesetzt.

Die Kolbenringe sind in den Beispielen für einen Kolbenkompresor der Kreuzkopfbauart beschrieben; sie lassen sich auch für Kompressoren der Tauchkolbenbauart verwenden.

## Patentansprüche

1. Kolbenkompressor zum ölfreien Verdichten von Gasen, mit mindestens einem Zylinder (1) und einem darin geführten Kolben (2), der mit mindestens einem geschlitzten, in einer Ringnut am Kolben (2) untergebrachten, sogenannten gefangenen Kolbenring (10) versehen ist, der mit seiner der Innenfläche (11) des Zylinders (1) abgewendeten Umfangsfläche (12) einen vom Druck des Gases im Kompressionsraum (4) des Zylinders (1) beaufschlagten Raum (23) der Ringnut begrenzt und der, ausgehend von dieser Umfangsfläche (12), zwei radiale, zueinander parallele Begrenzungsflächen (13, 14) aufweist, von denen sich die dem Kompressionsraum (4) zugewendete Fläche (14) über einen Teil der radialen Ringbreite erstreckt, wobei der Kolbenring (10) mit seinen beiden parallelen Begrenzungsflächen (13, 14) an entsprechenden Flächen der Ringnut gleitend geführt ist, **dadurch gekennzeichnet**, dass die dem Kompressionsraum (4) zugewendete Restfläche (16) des Kolbenrings (10), von der der Zylinderinnenfläche (11) zugewendeten Umfangsfläche (15) ausgehend, als Keilfläche ausgebildet ist, die sich unter einem Winkel (α) von 5 bis 15° zu einer Parallelen zu der dem Kompressionsraum (4) zugewendeten Begrenzungsfläche (14) bis zu dieser Begrenzungsfläche (14) erstreckt, und dass auch die der Keilfläche (16) benachbarte Fläche in der Ringnut am Kolben (2) unter dem gleichen Winkel (α) parallel zur Keilfläche (16) verläuft.

2. Kompressor nach Anspruch 1, dadurch gekennzeichnet, dass bei mit zweistufiger Kompression arbeitenden Maschinen auch die der Keilfläche (16) in axialer Richtung gegenüberliegende Fläche (16') des Kolbenrings (10) als Keilfläche ausgebildet ist und diese zweite Keilfläche (16') wie auch die dieser zweiten Keilfläche benachbarte Fläche in der Ringnut unter einem Winkel von 5 bis 15° verlaufen.

3. Kompressor nach Anspruch 1 oder 2, dadurch gekennzeichnet, dass der Kolbenring (10) aus Kunststoff mit guter Trockenlaufeigenschaft besteht.

4. Kompressor nach den Ansprüchen 1 und 3, dadurch gekennzeichnet, dass der dem Kompressionsraum (4) und der der Zylinderinnenfläche (11) abgewendete Teil (10', 10'') des Kolbenringquerschnitts in Form eines L aus einem Werkstoff mit grösserer Warmfestigkeit besteht als der übrige Ringquerschnitt.

## Claims

1. A piston compressor for the oilfree compression of gases, having
at least one cylinder (1) and a piston (2) guided in it and provided with at least one split, socalled trapped piston ring (10) which is accommodated in a ring groove on the piston (2) and by its circumferential face (12) remote from the inner face (11) of the cylinder (1) confines in the ring groove a space (23) acted Upon by the pressure of the gas in the compression Space (4) in the cylinder (1), and which, starting from the said circumferential face (12) exhibits two surfaces (13, 14) which are radial and parallel with one another and of which the face (14) next the compression space (4) extends over part of the radial width of the ring, the piston ring (10) being guided by its two parallel surfaces (13, 14) to slide against corresponding faces of the ring groove, characterized in that starting from the circumferential face (15) next the inner face (11) of the cylinder the residual area (16) of the piston ring (10) next the compression space (4) is made as the face of a wedge which extends at an angle (α) of from 5 to 15° to a line parallel with the surface (14) next the compression space (4), as far as this surface (14), and that the face of the ring groove in the piston (2) adjacent to the wedge face (16) also runs at the same angle (α) in parallel with the wedge face (16).

2. A compressor as in Claim 1, characterized in that
in the case of machines working with compression in two stages the face (16') of the piston ring (10) lying opposite the wedge face (16) in the axial direction is made as the face of a wedge and this second wedge face (16') as well as the face of the ring groove adjacent to this second wedge face run at an angle of from 5 to 15°.

3. A compressor as in Claim 1 or 2, characterized in that
the piston ring consists of plastics which has a good dry-running property.

4. A compressor as in Claims 1 and 3, characterized in that
the portions (10', 10'') of the L-shaped cross-section of the piston ring which are remote from the compression space (4) and from the inner face (11) of the cylinder consist of a material of higher heat resistance than the remaining cross-section of the ring.

## Revendications

1. Compresseur à piston pour comprimer des gaz sans lubrification, comprenant au moins un cylindre (1) et, guidé à l'intérieur, un piston (2) muni d'au moins un segment de piston (10) dit 〈〈 captif 〉〉 qui est fendu et logé dans une gorge annulaire du piston (2), dont la surface périphérique (12) opposée à la surface intérieure (11) du cylindre délimite, dans la gorge annulaire, une chambre (23) sollicitée par la pression du gaz présent dans la chambre de compression (4) du cylindre (1), et qui, à partir de cette surface périphérique (12), comporte deux surfaces de délimitation (13, 14) radiales, parallèles entre elles, parmi lesquelles la surface (14) tournée vers la chambre de compression (4) s'étend sur une partie de la largeur annulaire radiale, le segment de piston (10) étant guidé de manière coulissante par ses deux surfaces de délimitation parallèles (13, 14) sur des surfaces correspondantes de la gorge annulaire, caractérisé en ce que la surface restante (16) du segment de piston (10) qui est tournée vers la chambre de compression (4) est conçue, à partir de la surface périphérique (15) tournée vers la surface intérieure (11) du cylindre, en forme de surface cunéiforme qui s'étend, selon un angle (α) de 5 à 15° par rapport à une parallèle à la surface de délimitation (14) tournée vers la chambre de compression (4), jusqu'à cette surface de délimitation (14), et en ce que la surface voisine de la surface cunéiforme (16) dans la gorge annulaire du piston (2) s'étend selon le même angle (α) parallèlement à la surface cunéiforme (16).

2. Compresseur selon la revendication 1, caractérisé en ce que, dans le cas de moteurs fonctionnant avec une compression en deux temps, la surface (16') du segment de piston (10) opposée dans le sens axial à la surface cunéiforme (16) est également conçue sous la forme d'une surface cunéiforme et cette seconde surface cunéiforme (16') de même que la surface voisine de cette seconde surface cunéiforme dans la gorge annulaire s'étendent selon un angle compris entre 5 et 15°.

3. Compresseur selon la revendication 1 ou 2, caractérisé en ce que le segment de piston (10) est réalisé en matière plastique à bonne propriété de fonctionnement à sec.

4. Compresseur selon les revendications 1 et 3, caractérisé en ce que la partie (10', 10'') qui appartient à la section du segment de piston en forme de L et qui est opposée à la chambre de compression (4) et opposée à la surface intérieure (11) du cylindre est réalisée dans un matériau possédant une résistance à chaud supérieure à celle du reste de la section transversale du segment.
